# EUROPEAN PATENT SPECIFICATION

(11) **EP 0 492 802 B1**
(45) Date of publication and mention of the grant of the patent: **11.05.1994**
(21) Application number: 91310813.0
(22) Date of filing: 25.11.1991
(51) Int. Cl.: B01J 19/32, F28F 25/08

(54) **Tower packing with louvers**
Kolonnenpackung mit Leitvorrichtungen
Garniture de tour pourvues de grilles

(30) Priority: 27.11.1990 US 618724; 27.11.1990 US 618725
(43) Date of publication of application: 01.07.1992
(73) Proprietor: GLITSCH, INC., Dallas Texas 75212 (US)
(72) Inventor: Chen,Gilbert K., Farmers Branch Texas 75248 (US); McKelvy,Robert, Dallas,Texas 75212 (US); Bonilla,Jorge A., Dallas,Texas 75248 (US); Glaspie,Don, Dallas,Texas 75229 (US)
(74) Representative: Hitchcock, Esmond Antony

(56) References cited:
- EP-A- 0 117 077
- EP-A- 0 170 402
- EP-A- 0 218 417
- EP-A- 0 300 506
- FR-A- 2 086 365

## Description

The present invention relates to structured pacing for vapor-liquid process towers and, more particularly, to a packing made up of corrugated, louvered contact plates disposed in face-to-face contact for use in such process towers.

In the vapor-liquid contact art, it is highly desirable to utilize methods and apparatus that efficiently improve the quantity of the mass and/or heat transfer occurring in process towers. The technology of such process towers is replete with various packing designs used for tower packing. The types of packing employed are functions of the particular process to be effected within the tower. The packing elements may thus comprise a structured array (structured packing) arranged to form a regular array inside the column or may comprise relatively small shapes such as rings or saddles dumped into and randomly arranged (dump packing) within the tower. Close fractionation and/or separation of the feed stock constituents introduced into the tower and the elimination of harmful or undesirable residual elements imparts criticality to the particular vapor-liquid contact apparatus chosen for a given application. The shape of the dump or structured packing elements determines the flow patterns in and density of the array and the resultant resistance to flow caused thereby. Prior art structured packing arrays have thus found utility in a variety of shapes, sizes and material forms.

It has been found particularly desirable in the prior art to provide apparatus and methods affording efficient heat transfer, fluid vaporization, or vapor condensing whereby cooling of one of the fluids can be accomplished with a minimum pressure drop through a given zone of minimum dimensions. High efficiency, low pressure drop and reduced temperatures are important design criteria in the chemical engineering art such as petroleum fractionation operations. Process towers for effecting such operations are generally of the character providing descending liquid flow from an upper portion of the tower and ascending vapor flow from a lower portion of the tower. Sufficient surface area for vapor-liquid contact is necessary for the primary function and the reduction or elimination of liquid entrainment present in the ascending vapor. Most often it is necessary for the structured packing array to have sufficient surface area in both its horizontal and vertical planes so that fractions of the heavy constituents are conducted downwardly in condensed form and that vapors are permitted to rise through the packing with minimum resistance. With such apparatus, heavy and light constituents of the feed are recovered at the bottom and top of the tower, respectively, by the interaction of the ascending vapor and descending liquid, mostly upon the surface of the structured packing.

A plurality of stacked layers affording compatible and complemental design configurations are generally assembled within a single process column. Each layer utilizes the velocity and kinetic energy of the ascending vapors to perform the dual function of eliminating liquid entrainment in the ascending vapor and the thorough and turbulent contacting of the vapor with the descending liquid to accomplish sufficient separation or fractionation of the fluids into desired components. Quick cooling of the ascending vapor is generally a prerequisite for efficient operation to effect efficient heat transfer for vapor condensation and minimum pressure drop in a minimum vertical depth of the packing. Oppositely inclined corrugated lamellae, or plates, have thus been utilized in the prior art for affording multiple vapor passages through the horizontal and vertical planes of the packing layers to insure the flow of vapor and distribution thereof within the lamellae and to prevent maldistribution, or channeling, of the vapor through certain portion of the layers and not others. Only in this manner is efficient and effective utilization of the column and the energy applied therein effected.

The structural configuration of inclined corrugated contact plates of the prior art variety often incorporates holes for vapor passage. Vapor turbulence is created by such holes to insure intimate vapor-liquid contact. It is also necessary to insure that the ascending vapor performs a dual function of liquid contact and liquid disentrainment within close proximity to the vertical location at which the ascending vapor approaches or leaves the vapor passage holes. In this manner maldistribution of the ascending vapor or descending liquid is reduced. It is, moreover, a paramount concern of the prior art to provide such methods and apparatus for vapor-liquid contact in a configuration of economical manufacture. Such considerations are necessary for cost effective operation.

Oppositely inclined corrugated plates provide but one method and apparatus for countercurrent, liquid-vapor interaction. With such packing arrays, the liquid introduced at or near the top of the column and withdrawn at the bottom is effectively engaged by vapor being introduced at or near the bottom of the column and withdrawn at the top. The critical feature in such methods and apparatus is to insure that the liquid and vapor achieve the desired degree of contact with each other so that the planned mass or energy transfer occurs at the designed rate. The internal structure is, of course, passive in the sense that it is not power driven externally and has few, if any, moving parts.

The prior art is replete with passive vapor-liquid contact devices utilizing cross-fluted and perforated sheets of material in face-to-face engagement. This configuration encourages the liquid moving through the packing to form itself into films having, in the aggregate, a large area over which the vapor may pass. However, the design problem is not merely a matter of providing a large surface area or a multitude of corrugations, cross-flutes, or perforations. A number of other interrelated design considerations must be taken into account, some of which have been mentioned above.

From a process standpoint, it is important that the desired vapor-liquid contact interaction be carried as close to completion as possible. For example, in a crude oil vacuum tower, efficient fractionation and good separation are needed to produce oil streams that are free of undesirable residual elements. As mentioned above, the contact column and its internal apparatus must efficiently utilize the heat supplied to the unit. In this manner, it minimizes direct operating costs, whether the objective is mass transfer, heat transfer, liquid-vaporization or vapor condensing duty. With the above, pressure drop is a primary consideration as is the vapor-liquid fluid interface. Structured packing for vaporliquid contact have been shown in the prior art in such references as U. S. Patent No. 3,343,821, issued September 26, 1967; Patent No. 4,139,584, issued February 13, 1979; Patent No. 4,128,684, issued December 5, 1978; Patent No. 3,785,620, issued January 15, 1974; and Patent No. 3,959,419, issued May 25, 1976.

In the above-referenced vapor-liquid contact method and apparatus patents, several design configurations are presented for affording intimate vapor-liquid contact. In particular, stacked corrugated contact plates in face-to-face contact having corrugations inclined to the horizontal, and/or orthogonal one to the other, have been shown and provided in various material configurations. These configurations include monofilament yarns, and solid plates. It is moreover prominent in the prior art to utilize fluted plates having a plurality of perforations therethrough. One such example is seen in U. S. Patent No. 4,296,050 issued October 20, 1981, while another is seen in British Patent No. 1,004,046, published Sept. 8, 1965.

While many prior art methods and apparatus for vapor-liquid contact have been shown to be relatively effective, certain disadvantages still remain. In particular, vapor-liquid contact towers incorporating descending liquid flow and ascending vapor flow of the structured packing variety defined above, are generally incapable of readily accommodating internal pressure differentials. Problems also exist with surfaces that face downward, because such surfaces are generally not effectively wetted. Even with slits or lancing of the packing, there are many downward facing surfaces, and few prior art designs effectively address proper wetting or vapor passage therethrough. This is true even with a plurality of apertures disposed in corrugated and/or cross-fluted plates in face-to-face contact such as those referenced above. Vapor flow is ultimately sensitive to pressure differentials, and is easily diverted between the myriad of exposed areas of mating corrugations or flutes.

It is desirable, in countercurrent flow, that both the liquid and the vapor effectively commingle along uniformly wetted packing surfaces. In order for this to occur, it has been shown to be very beneficial for both the liquid and the vapor to be able to pass through the corrugated sheet for effective interaction. Without the free passage of both vapor and liquid through the sandwiched corrugated sheets, zones of either high or low volume flow can occur. These flow volume differentials result in a lack of uniformity and homogeneity within the pacing. The most efficient structured packing configuration incorporates a region wherein the ratios of vapor and liquid remain relatively constant with consistent interaction and mixing. This requires a packing surface facilitating uniform flow of both liquid and vapor through both sides of the corrugated sheets, yet in a configuration promoting uniform wetting and spreading of liquid and equalization of pressure between said sheets.

It would be an advantage, therefore, to overcome the problems of the prior art by utilizing the flow directing and gathering features of louvers constructed in the corrugated plates. The methods and apparatus of the present invention provide such an improvement over the prior art packing by providing a corrugated plate having a select louver configuration therein. In this manner, liquid is caused to flow upon and through both sides of the corrugations of facing plates in paths which substantially increase the vapor-liquid contact of ascending vapor and descending liquid normally passing between said corrugated plates. The presence of selectively oriented arrays of louvers in the corrugated sheets permits vapor and liquid flows to be exposed on opposite sides thereof while flowing in opposed directions thereacross. Such liquid vapor flow configurations maximize mass transfer efficiency and may be provided with a minimal increase in production costs over that of conventional opposed plate corrugation assemblies.

The present invention relates to vapor-liquid contact towers and structured packing arrays disposed therein for affording vaporliquid contact. More particularly, one aspect of the present invention comprises an improved tower packing of the type comprising a plurality of corrugated sheets in face-to-face contact with opposed corrugations inclined oppositely one to the other. The packing is adapted for receiving a descending liquid flow concomitantly with an ascending vapor flow. This flow pattern enhances vapor-liquid contact. The improvement comprises an array of louvers formed in common flat areas of the corrugated sheets, the louvers being oriented to pass vapor and liquid flow through the flat areas of the sheets.

In another aspect, the invention includes a tower packing for contacting a vapor stream with a liquid stream comprising vertically oriented corrugated sheets in face to face contact. Each of the sheets has fold lines therein establishing ridges and valleys separated by flat areas. The ridges, valleys and flat areas define the corrugated configuration of the sheets. The flat areas are provided with a plurality of laterally extending louvers and substantially all of the louvers terminate adjacent but short of the fold lines. The louvers have some upwardly facing edges and some downwardly facing edges. Some of the louvers project transversely outwardly from the respective planes of the flat areas and some of the louvers project transversely inwardly from the respective planes of the flat areas. In one embodiment of the invention, some of the louvers are substantially smaller than the others, which small louvers are spaced in select arrays therebetween. In another embodiment of the invention, all of the louvers are of a single size.

In yet another aspect, the invention described above further includes a tower packing in which at least some openings through the corrugated sheets are defined by an outwardly projecting louver on one side thereof and an inwardly projecting louver on an opposed side thereof. At least some of the louvers may be arranged in laterally aligned pairs and the louvers of the laterally aligned pairs may have their respective edges oriented in the same vertical direction, extending in the same transverse direction from the respective plane of the flat areas.

In a further aspect, the invention includes an improved method of mixing liquid and vapor in a process column of the type described above wherein structured packing is provided in corrugated plates disposed in face to face relationship. The improvement comprises the steps of providing the corrugated plates with a plurality of louvered openings disposed in generally parallel spaced relationship one to the other and forming a first set of large louvered openings in the plates. The large louvered openings are disposed in parallel spaced relationship across the flat areas of the corrugated plates, and an array of small louvered openings are formed between the large louvered openings. Adjacent ones of the large louvered openings are formed in opposite orientations and the small louvered openings are disposed adjacent thereto. Liquid and vapor are then discharged over the corrugated plates in countercurrent flow which passes through certain ones of the louvers for enhancing the mixing therebetween.

The invention will now be described by way of example and with reference to the accompanying drawing in which:
FIG. 1 is a perspective view of a corrugated plate adapted for vapor-liquid contact and having small and large louvers formed therein in accordance with the principles of the present invention;
FIG. 2 is a perspective view of a plurality of the corrugated plates of FIG. 1 in an assembled configuration;
FIG. 3 is an enlarged top plan view of the assembled vapor-liquid contact plates of FIG. 2;
FIG. 4 is an enlarged, fragmentary, perspective view of the corrugated plate of FIG. 1 illustrating the small and large louvers formed therein;
FIG. 5 is a side elevational, cross sectional view of a process tower having stacked therein a plurality of layers of the assembled plates illustrated in FIG. 2 and incorporating one embodiment of the method and apparatus of the present invention;
FIG. 6 is a top plan, cross sectional view of the process tower of FiG. 5 taken along lines 6-6 thereof;
FIG. 7 is an enlarged side elevational cross sectional view of the corrugated plate of FIG. 4 taken along lines 7-7 thereof;
FIG. 8 is an enlarged side elevational cross sectional view of the corrugated plate of FIG. 4 taken along lines 7-7 thereof and illustrating the flow of fluids therethrough;
FIG. 9 is an enlarged, fragmentary, perspective view of an alternative embodiment of the corrugated plate of FIG. 1 illustrating the louvers formed therein;
FIG. 10 is an enlarged side elevational cross sectional view of the corrugated plate of FIG. 9 taken along lines 10-10 thereof;
FIG. 11 is an enlarged side elevational cross sectional view of the corrugated plate of FIG. 9 taken along lines 10-10 thereof and illustrating the flow of fluids therethrough;
FIG. 12 is a graph charting the performance of the packing of FIG. 4 for various tower pressures;
FIG. 13 is a graph charting the performance of the packing of FIG. 4 relative to other structured packing at a selected tower pressure;
FIG. 14 is a graph charting the performance of the packing of FIG. 4 relative to other structured packing at a second tower pressure;
FIG. 15 is a graph charting the performance of the structured packing of FIG. 4 relative to other structured packing at a third tower pressure;
FIG. 16 is a graph charting the performance of the packing of FIG. 9 for various tower pressures;
FIG. 17 is a graph charting the performance of the packing of FIG. 9 relative to other structured packing at a selected tower pressure;
FIG. 18 is a graph charting the performance of the packing of FIG. 9 relative to other structured packing at a second tower pressure;
FIG. 19 is a graph charting the performance of the structured packing of FIG. 9 relative to other structured packing at a third tower pressure; and
FIG. 20 is a perspective view of another alternative embodiment of the corrugated plate of FIG. 4

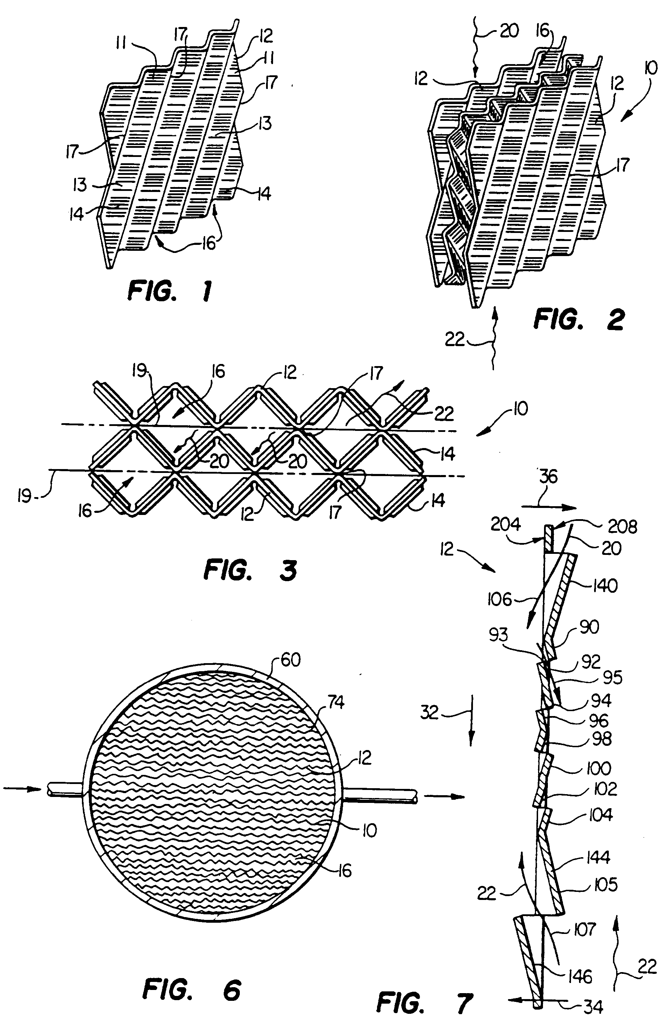

Referring first to FIG. 1, there is shown a perspective view of a vapor-liquid contact plate 12 constructed in accordance with the principles of the present invention for use in a process tower to be described below. The plate 12 comprises a relatively thin corrugated sheet formed from stainless steel, or the like, and having a series of large and small louvers formed therethrough. Thin corrugated sheets of this general type are conventionally used for vapor-liquid contact plates. Large louvers 13 are spaced between series of smaller louvers 14, forming defined louver patterns across the plate 12. Each louver 13 and 14 is formed in the generally flat, or planar side wall 11 of the corrugation and, as described below, said louvers extend to, but not through the corrugation valleys or ridges. Vapor and liquid are then induced to flow in opposite directions along such louver regions and through the plate 12 for effecting mass and heat transfer, as discussed in more detail below. The manner in which the vapor and liquid flow is directed upon, through and between respective plates 12 directly affects the efficiency of the tower operation and forms the subject of the present invention.

Still referring to FIG. 1, the plate 12 comprises a crimped or corrugated member having a plurality of flow channels 16 defined between adjacent side walls 11 and within the respective corrugation ridges 17 disposed thereacross. Each corrugation ridge 17 defines a trough on the opposite side thereof, which "trough" may also be referred to by the number 17. The corrugated plates 12 are adapted for positioning in face-to-face relationship, wherein the louvers 13 and 14 induce the passage of liquid and vapor through the plate 12. The flow of liquid and vapor through the plates 12 minimizes maldistribution of the fluid constituents within the structured packing of the tower under various operating conditions that will be discussed below.

Referring now to FIG. 2, there is shown a perspective view of a partial assembly of structured packing 10 of plates 12. The structured packing assembly 10 as shown herein comprises only a portion of a structured packing layer for use in a process tower. A large number of plates 12 would ordinarily be used to define a single layer, any part of which would appear similar to that shown in FIG. 2. In the assembled configuration, the plates 12 are disposed in face to face relationship with their corrugation angles oppositely disposed. A plurality of discrete flow channels 16 are formed within the packing 10 as defined by the contiguous plates 12. The respective flow channels 16 defined between the corrugation ridges 17 of each plate 12 are best seen in the top plan view of FIG. 3.

Still referring to FIG.2, it may be seen that liquid descending through the packing assembly 10 will engage vapor ascending through said pacing resulting in interaction therebetween. Liquid descending along each plate 12 is optimally spread across both sides of the corrugation channel 16 and will also pass through the louvered surfaces thereof. Vapor rising between plates 12 may likewise pass along and through the respective plates by virtue of the louvers 13 and 14 therein. The orientation of the louvers 13 and 14, as described in more detail below, will affect the volume and flow pattern of vapor deflected therethrough.

Referring now to FIG. 3, there is shown a top plan view of the assembly 10 of FIG. 2 wherein the plates 12 are assembled in face-to-face relationship. In this abutting engagement, a notional plane 19 is defined between the contiguous ridges 17 of adjacent plates 12. In this manner, ridges 17 of adjacent plates 12 contact each other along the notional plane 19, which is represented in phantom in the present illustration. In some prior art structured packing, a lamella discretely separates the adjacent corrugated plates 12 by being placed in the notional plane 19. This physical separation across the notional plane affords defined fluid flow as set forth and described in U.S. Patent No. 4,597,916, assigned to the assignee of the present invention and incorporated herein by reference. In the present construction, no lamella is provided along the notional plane which separates the plates 12 one from the other. Such a plate is not considered necessary because of the enhanced vapor and liquid flow along and through the plates 12 as provided by the louvered configuration herein described.

Referring now to FIGS. 2 and 3 in combination, liquid 20 descending through the packing 10 flows upon and between the adjacent plates 12 as vapor 22 ascends upwardly therethrough. The louvers in surface 11 will vector the flow of both vapor and liquid through the plates 12 for uniform interaction therebetween. As shown most clearly in FIG. 3, the ascending vapor 22 will rise upwardly through the channels 16 defined between the plates 12. Concomitantly, the liquid 20 will descend generally along both sides of the plates while engaging the ascending vapor 22 rising therein. The presence of louvers 13 and 14 will directly affect both the descending liquid 20 and ascending vapor 22 by forcing said constituents into direct contact one with the other and by forcing said constituents to pass through the respective plates 12 in which the louvers 13 and 14 are formed.

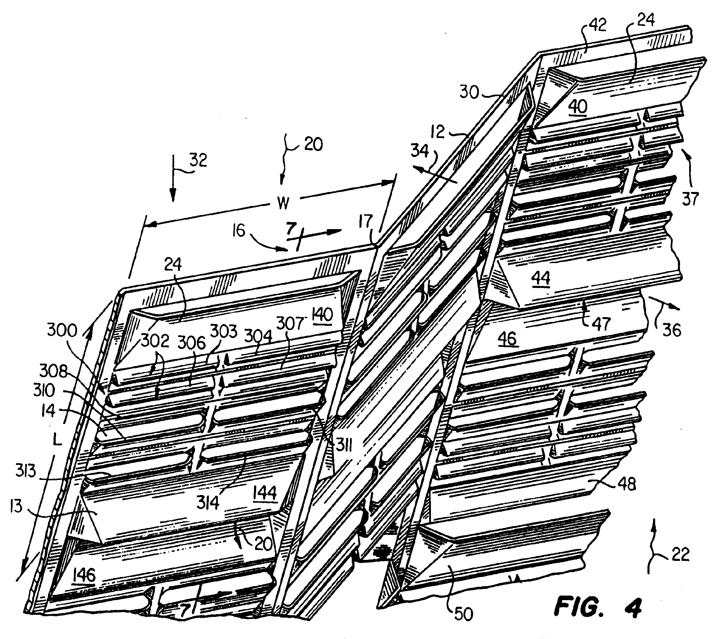

Referring now to FIG. 4, an enlarged, fragmentary, perspective view of a section of the plate 12 of FIG. 1 is shown. The plate 12 includes corrugation ridges 17 defining flow passages 16 (seen most clearly in FIG. 2) therebetween. The plate 12 further includes a plurality of louvers 13 and 14 defining a series of directional flow openings therethrough. Large louvers 13 are formed in a preset pattern relative to the smaller louvers 14. The orientation of the respective louvers is comprised of a number of parameters and the discussion of said parameters requires a series of terms for purposes of discussion therewith. The following terms are utilized herein for purposes of discussing the louver configuration as shown in FIG. 4 and subsequent drawings. Each flat area 11 has a corrugation width "W" that is equal to the distance between adjacent folds, or ridges of the corrugation. For references purposes, a length "L", taken at a right angle from "W" along the flat area which is equal to the corrugation width "W" will be used to define a unit area (L X W) that is herein referred to as a "square corrugation unit". For example, a corrugation width W of .75 inches (1.9 cm) would mean that a length L down the corrugation flat area of .75 (1.9 cm) inches would define a "square corrugation unit". In this example, the square corrugation unit area is 0.5625 square inches (3.63 cm²). The reference to "square corrugation unit" will be used herein for purposes of defining the number of louvers from a density standpoint.

Additional terms used herein may be based upon the bottom and top of plate 12 of FIG. 4. The top edge 30 will be considered the uppermost reference surface and the direction of arrow 32 will be considered downwardly therefrom. Arrow 34 represents the direction through the plate 12 which will be termed "inward" or "inwardly" hereinafter; while arrow 36 represents the direction through the plate "outwardly" thereof; and number 37 will thus represent the "outward" surface. Each louver is formed adjacent to an oppositely disposed "companion" louver which also extends from the opposite surface of the plate 12 to define an enlarged opening, or space therebetween and through the plate 12. Also each louver is formed with a "juxtaposed" louver adjacent thereto and extending from a common land area of plate 12. Each juxtaposed louver pair comprises oppositely oriented louvers which may project from the same or opposite surfaces of the plate 12 as discussed in FIG. 7.

Utilizing the parameters above discussed and still referring to FIG. 4, uppermost louver 40 of surface 37 of flat plate section 42 faces upwardly and outwardly. Large louver 44 disposed therebeneath faces outwardly and downwardly. Between large louvers 40 and 44 a series of smaller louvers 14 are formed in pairs. Beneath large louver 44 is another large louver 46 which faces upwardly and inwardly to form a large opening through the plate 12 indicated by arrow 47. Because of this particular view, the inward direction of louver 46 is not as clearly shown as it will be in FIG. 7. Beneath louver 46 is large louver 48 which faces downwardly and inwardly. Below louver 48 and adjacent thereto, large louver 50 faces outwardly and upwardly. The pattern of the smaller louvers will be discussed in conjunction with FIG. 7 below.

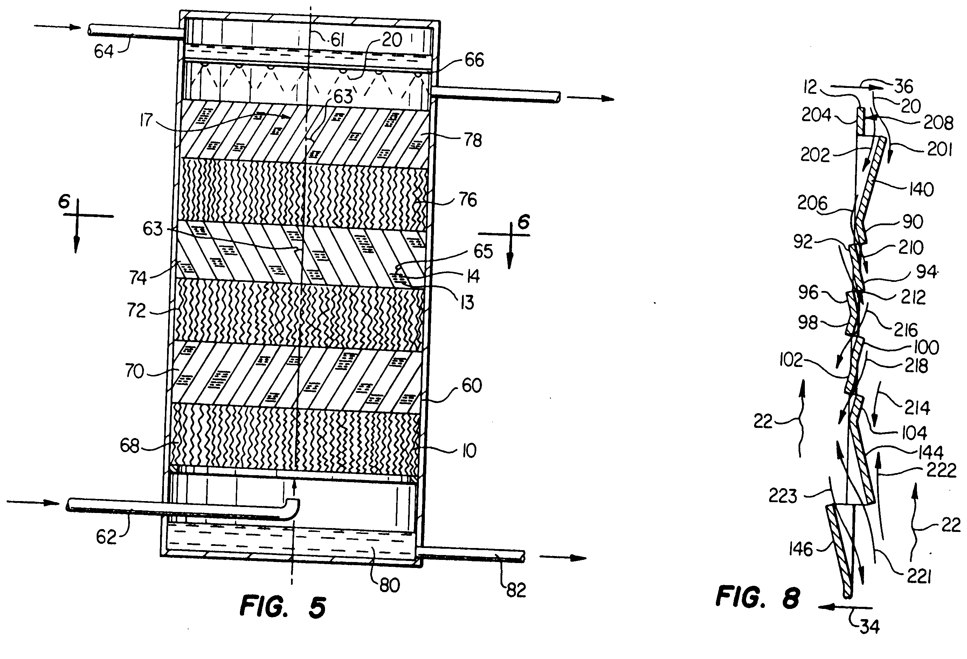

The construction of the large louvers 13 within the plate 12 provides a myriad of advantages to fluid flow therealong. Liquid 20 descending downwardly upon the plate 12 will engage the large louver 24 facing upwardly causing the deflection through the plate 12. If said liquid does not then migrate through plate 12 via the smaller louvers 14 disposed therebelow, it will eventually engage a large lower louver 46 for engagement therewith, causing said liquid to pass downwardly and therethrough. This flow is illustrated very diagrammatically in FIG. 8. A myriad of flow configurations and patterns will exist along plate 12 depending on the fluid flow characteristics tower operating conditions.

Still referring to FIG. 4, the ascending vapor 22 will likewise find itself sequentially engaged by downwardly extending louvers such as louver 44 which will capture and redirect portions of ascending vapor flow therethrough. The ascending vapor flow passing upwardly through louver 44 will directly engage descending liquid flow captured by upper louver 40 enhancing the vapor-liquid contact therebetween. Not only is the liquid directly forced into engagement with the vapor, but the vapor is permitted to vent through the plate 12 for proper pressure and flow equalization.

Referring now to FIG. 5, there is diagrammatically shown a process tower 60 stacked with layers of structured packing 10 constructed in accordance with the principles of the present invention. The tower 60 includes a lower vapor feed line 62 and an upper liquid feed line 64. Liquid and vapor discharge lines are shown. Liquid 20 is dispersed across a distributor 66 for passage downwardly through the structured packing disposed therebeneath. The tower 60 further includes a central axis 61, shown in phantom. It may be seen that the corrugation ridges 17 form an angle 63 relative to the tower axis 61. Angle 63 is the acute angle which the ridge 17 forms. It may also be seen that the louvers 14 of this particular embodiment are formed orthogonally to the tower axis 61 and form an acute angle 65 relative to the corrugation ridge 17. In accordance with this embodiment of the present invention, the sum of angles 63 and 65 is approximately 90°.

Still referring to FIG. 5, a lower level 68 of structured packing is disposed immediately above the vapor supply line 62. Above layer 68 is a second layer of pacing 70 which is rotated relative to layer 68. The angular rotation is typical in the placement of structured packing beds in process columns and may be in the range of 45° to 90°, and a variety of angles could be used. Layer 72 is thus disposed at an angle to layer 70 with layer 74 rotated relative thereto. Upper layer 76 is disposed beneath top layer 78 which is disposed beneath the liquid discharge distributor 66. Liquid 20 is shown discharged from distributor 66, which liquid collects in lower reservoir 80 at the bottom of the column 60 where it is discharged through discharge pipe 82. In this typical diagrammatic illustration of structured tower packing, it may be seen that the liquid flows in direct counter-current flow relative to the vapor for interaction and mass transfer therewith.

Referring now to FIG. 6, there is shown a top plan view of the structured packing layer 74 of FIG. 5 taken along lines 6-6 thereof. The packing 74 is diagrammatically shown to comprise a series of corrugated plates 12 aligned in a generally parallel spaced relationship in the manner discussed above. It may be seen that the array of plates 12 form an intricate section of flow channels 16 therebetween. The uniform countercurrent flow of liquid and vapor therein can prevent a number of problems from occurring and the present invention addresses such considerations.

Referring now to FIG. 7, there is shown an enlarged, side elevational, cross-sectional view of a section of the plate 12 of FIG. 4 illustrating the louvered configuration thereof. A series of large louvers have been sequentially numbered to generally correspond to the previous numbering of the louvers in FIG. 4. The louvers 13 and 14 are seen to extend from inside plate surface 204 and outside plate surface 208, from which directional references will be taken. Louver 140 is thus seen as the counterpart of louver 40, above discussed, while louver 144 is the counterpart of louver 44 above discussed. Louvers 140, 144 and 146 are likewise shown in FIG. 4 as well as discussed herein. Louver 140 is oriented upwardly and outwardly to receive the flow of liquid 20 therein. The flow of liquid 20 is shown in the direction of arrow 106, which flow is downwardly and inwardly in the direction of arrow 32. Immediately beneath large louver 140 is a small louver 90 facing downwardly and outwardly and contiguous adjacent small louver 92 facing upwardly and inwardly. The aperture 93 defined as that opening between oppositely oriented louvers 90 and 92 (one facing inwardly, one facing outwardly) will form a larger space than any single small louver 14 could form by itself relative to the plate 12. Louver 92 thus faces upwardly to define aperture 93, which aperture engages descending liquid flow 106 for vectoring said liquid flow outwardly therethrough in the direction of arrow 95. It has been demonstrated that upwardly deflecting louvers of both the large and the small variety engage and directly deflect the downward flow of liquid 20 therethrough, forcing said liquid to pass through the plate 12.

Still referring to FIG. 7, beneath louver 92 is disposed small, "juxtaposed" louver 94, which louver extends from a common land area with louver 92 and is angled downwardly and outwardly. Below louver 94 is small, "companion" louver 96, which louver faces inwardly and upwardly to form the enlarged opening therebetween. Louver 98 disposed therebelow faces downwardly and inwardly and comprises the "juxtaposed" louver to louver 96. Louver 100 faces upwardly and outwardly and is formed adjacent lower louver 102 which faces downwardly and inwardly. Finally, louver 104 faces outwardly and upwardly and is disposed immediately above large louver 144. Any liquid passing downwardly over the outward surface of the louver 100 could be engaged by the upward opening of louver 104 and deflected therethrough. Liquid which is not deflected through louver 104 will pass downwardly across the upper and outer surface 105 of louver 144. Ascending vapor 22 would likewise find a passage between large louvers 144 and 146 as shown by arrow 107. This flow of vapor is not only through plate 12 but counter-current to, and intimately against, liquid flowing downwardly along both surfaces thereof. Such intimate flow communication further enhances the mass transfer therebetween.

Referring now to FIGS. 4 and 7 in combination, the present invention provides, in one embodiment, a series of large and small louvers which impart an advantageous flow characteristic to the counter-current interaction of vapor and liquid. The small louvers 14 are capable of a vectoring thin sheets of liquid therethrough while permitting a continual flow of both liquid and vapor thereover. The larger louvers 13 are capable of deflecting much larger amounts of liquid and vapor therethrough and/or venting large accumulations of either for purposes of flow equalization on opposite sides of plate 12.

Referring now to FIG. 8, there is shown the same view of the plate section of FIG. 7 illustrating, in more detail, one pattern of passage of vapor and liquid therethrough. Each of the various louvers are not separately numbered in this view for purposes of facilitating a discussion of the fluid flow pattern therein. Descending liquid 20 is thus shown to form a split stream 201 and 202 as it encounters first large louver 140 projecting from side 208. The stream 202 is vectored downwardly and inwardly by louver 140 causing it to pass to the inside surface 204 of plate 12. Along the inside surface 204, the liquid 202 is permitted to continue downwardly in the direction of flow arrow 206. In this pattern, it may continue downwardly or flow through small louver 90 to the outside surface 208 of plate 12 as indicated by flow arrow 210. The volume of fluid 206 vectored through the small louvers such as louver 90, will depend on a number of parameters including the liquid, flow rate, the louver size, and the configuration of ascending vapor flow 22. It may be seen that the size of the opening for the small louver 90 is relatively small, and the maximum volume of liquid that can pass therethrough is substantially less than that afforded by the large opening of louver 140. Once the maximum flow rate is achieved, additional liquid will simply flow over the louver.

Still referring to FIG. 8, the liquid flow 206 may continue downwardly along the inside surface 204 to egress through louver 94 as labeled stream 212. A wide variety of flow configurations would, of course, would be possible, and these are presented for purposes of illustration only. The accumulation of fluid flow streams 201, 210 and 212 may likewise continue downwardly along the outside surface 208 in the direction of arrow 214 or a portion thereof may be vectored back through the plate 12 as shown by arrow 216 to emerge under louver 98 as shown herein. In that configuration, the flow 216 will then flow downwardly along plate surface 204. At this point the liquid which began as liquid flow 20 may have passed through the plate as many as three times; having been exposed to ascending vapor flow 22 on both sides of the plate 12. Likewise, some liquid may not pass through louver 98 and may continue as liquid stream 218 which passes through lower louver 104 as shown herein. The designation of the louver through which the flow passes clearly depends on the point of reference of the observer. Liquid stream 218 actually passes between louvers 102 and 104 because the space therebetween is formed as a result of said louvers in combination. References to flow through a single louver are to be viewed as a reference to flow through that louver and the adjacent louver forming the flow aperture therebetween.

Referring still to FIG. 8, the descending liquid flow 20 meets the ascending vapor flow 22 along the plate 12. The ascending vapor flow is most easily vectored through the plate 12 by the large louvers 140 and 144 as shown herein. The large louvers are sized to present a sufficient surface area for engaging and vectoring the vapor flow through the plate 12, which size is substantially larger than the aperture region of a small louver such as louver 90. In this manner, there should not be a volume of liquid passing through the large louver 144 which would block and/or inhibit the ascending flow of vapor therethrough. Arrow 221 thus indicates the passage of vapor 22 through the plate 12 as arrow 222 indicates the passage of vapor around louver 144 and along plate 12. Arrow 221 is shown oppositely disposed arrow 223, indicating the counter-current flow of liquid along the inside surface 204 of plate 12, which liquid is deflected outwardly and downwardly through large louver 146. It may be seen that a greater quantity of liquid can be carried through the large louver 146 than the small louver 96. For this reason, the orientation of the louvers is formed complementary to one another and the constituent flow therethrough. For example, as seen in FIGS. 4 and 8 in combination, the large louvers 140 will engage and divert a substantial volume of liquid 20 passing downwardly along plate 12. Unless the liquid flow is very large, only a small portion of liquid will be diverted over louver 140 in the direction of arrow 201. For this reason, lower louvers 90 and 94 are outwardly and downwardly deflected louvers, which present exposed louvered surfaces of upwardly and inwardly deflected louvers 92 and 96 to the liquid flow 202 on side 204. This pattern is presented in comparison to a hypothetical louver configuration of an upwardly/outwardly deflected set of louvers which could be disposed immediately below large louver 140. Such a hypothetical louver configuration would not complement the large louver configuration due to the particular constituent flows therethrough. Similarly, large louver 144 which is downwardly and outwardly deflected is disposed beneath upper louvers 104 and 100 which are upwardly and outwardly deflected. Vapor that will be deflected through the plate 12 is deflected by louver 144 and thus louvers 100 and 104 are not oriented for engaging the vapor flow on outside surface 208 and, instead, are oriented for collecting liquid flow therethrough as shown by flow arrows 216 and 218 of FIG. 8. This complemental louver orientation between small and large louvers maximizes the efficiency of the counter-current vapor liquid flow and the interaction therebetween. Consistent therewith, it may be said that in the present embodiment each large louver 13 is constructed oppositely to the adjacent smaller louvers 14 for maximizing fluid flow through the plate 12. As an example, downwardly and outwardly deflected large louvers are disposed beneath upwardly and outwardly deflected small louvers. There may, of course, be exceptions near the edges of the plates 12.

Referring back to FIG. 4, the louvers 13 and 14 are constructed in a pre-defined density and pattern. Both the density and the patterns may, of course, vary for particular applications. In the present embodiment the pattern 300 incorporates a series of large louvers 140 and 144 between which are disposed small louvers. The pattern has a density on the order of 17 louvers per square corrugation unit (16 small louvers and 1 large louver). The particular pattern 300 includes the 16 smaller louvers 302 (8 louvers projecting outwardly and 8 louvers projecting inwardly) between the large louvers 140 and 144. The small louvers 302 are also of substantially smaller size relative to the large louver 140. Small louvers 302 include, in the present illustration, upper louvers 303 and 304 formed immediately beneath large louver 140. The louvers 303 and 304 are downwardly and outwardly deflected. Louvers 306 and 307 are each formed beneath louvers 303 and 304, respectively, and are likewise formed downwardly and outwardly. An intermediate land area 308 is formed beneath louvers 306 and 307, which land area is of the approximate width of the large louver 140 and of twice the width of smaller louvers 303, 304, 306 and 307. It may be seen that the small louvers 303 and 304 are constructed to present a combined width substantially equivalent to the width of the large louver adjacent thereto. The actual width of the small louvers may vary, but in the present embodiment, for example, each of the small louvers 14 has a width on the order of 45% of the width of the flat area 11; and the height of the small louvers 14 is on the order of 20% of the height of the large louver 13. The laterally aligned pairs of small louvers terminate adjacent to, but short of the fold lines 17. The smaller, segmented, construction is preferable for structural purposes in view of the reduced surface of the louver extending therefrom. It may be seen that the surface area of the louver itself provides a degree of structural rigidity adjacent to the aperture formed between louvers.

Still referring to FIG. 4, louvers 310 and 311 are formed immediately beneath land area 308, which louvers 310 and 311 are upwardly and outwardly deflected. Louvers 313 and 314 are disposed beneath louvers 310 and 311, respectively, and are likewise formed outwardly and upwardly. This constructional aspect may also be seen in the cross-section view of FIG. 7. It may be seen that each of the small and large louvers extend laterally within the flat areas between the ridges and valleys of each corrugated plate 12 and substantially all of the louvers terminate adjacent, but short of, the fold lines. This lateral size aspect of each louver is specifically shown in FIG. 4. Although the terminology of upwardly and downwardly deflected louvers has been used herein, other nomenclature can be used. For example, it may be said that the louvers have faces or edges which face upwardly or downwardly. The louvers may also include some that project transversely outwardly from the respective plane of the flat areas of the plate 12 and some that project transversely inwardly from the respective planes of the flat areas of said plates. The openings between the louvers may also be defined by an outwardly projecting louver on one side of the plate and an inwardly projecting louver on the opposite side of the plate 12.

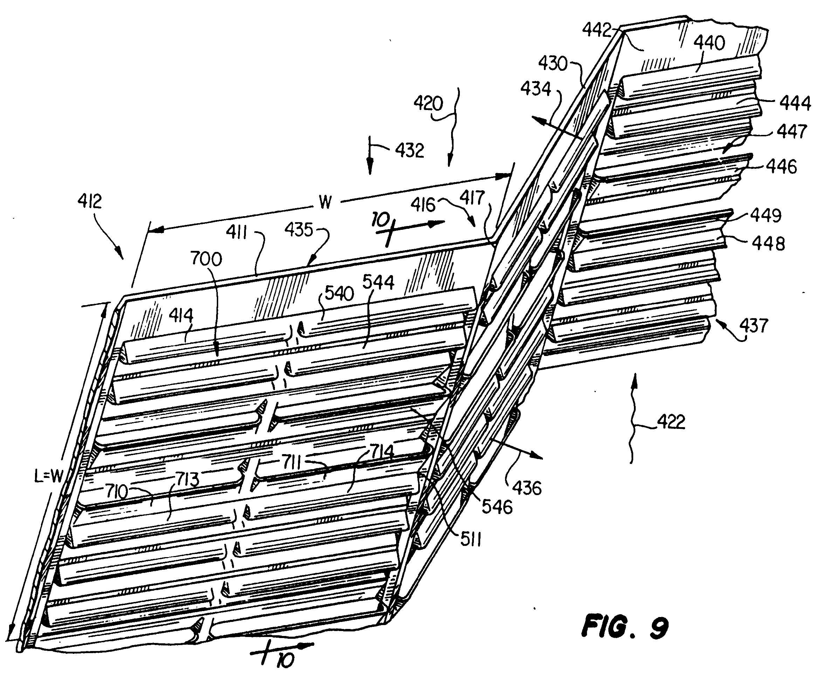

Referring now to FIG. 9, an enlarged, fragmentary, perspective view of a section of an alternate embodiment of the plate 12 of FIG. 1 is shown. The plate 412 includes corrugation ridges 417 defining flow passages 416. The plate 412 further includes a plurality of louvers 414 defining a series of directional flow openings therethrough. The louvers 414 are formed in a single size and preset pattern in this particular embodiment.

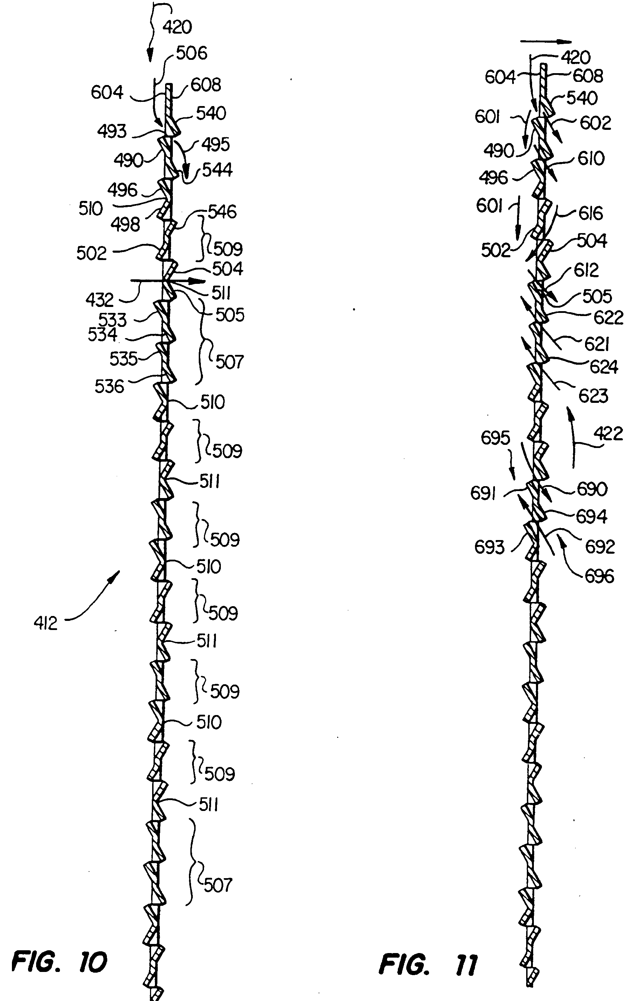

As in FIG. 4, the top edge 430 will be considered the uppermost reference surface and the direction of arrow 432 will be considered "downwardly" there from. Arrow 434 represents the direction through the plate 412 which will be termed "inward" or "inwardly" hereinafter and number 435 will thus designate the "inward" surface. Arrow 436 represents the direction through the plate "outwardly" thereof; and number 437 will thus represent the "outward" surface. Each louver is formed adjacent to an oppositely disposed "companion" louver which also extends from the opposite surface of the plate 412 to define an enlarged opening or space therebetween and through the plate 412. Also each louver is formed with a "juxtaposed" louver adjacent thereto and extending from a common land area of plate 412. Each juxtaposed louver pair comprises oppositely oriented louvers which may project from the same or opposite surfaces of the plate 412 as discussed in FIG. 10.

Utilizing the parameters above discussed and still referring to FIG. 9, uppermost louver 440 of surface 437 of flat plate section 442 faces downwardly and outwardly. Louver 444 disposed therebeneath and also extending from surface 437, faces downwardly and outwardly. Below louvers 440 and 444 a series of louvers is formed in surface 437 which louvers face upwardly and outwardly. Louver 446 extending from surface 437, faces upwardly and outwardly to form opening 447 through the plate 412. As discussed above and as seen most clearly in FIG. 10 below, each aperture such as opening 447 formed by a louver 414 is the product of two oppositely disposed companion louvers extending from opposite surfaces of the plate 412. Opening 447 is formed not only by the louver 446 extending upwardly and outwardly from side 437 but also from a louver (not shown) adjacent louver 446 formed along inside surface 435 of plate 412 extending downwardly and inwardly therefrom. The size of the opening 447 is thus the product of the pair of companion louvers formed on opposite sides of the plate. References may be made to a single louver on a single side of the plate 412, but the louver aperture associated therewith is also the result of a companion louver formed on the opposite side of said plate. For example, although louver 444 is said to be disposed beneath louver 440, it should be understood that the discussion is addressing surface 437 of flat plate section 442 and that at least one upwardly inwardly deflected louver is formed on the opposite surface 435, disposed between louvers 440 and 444, as shown in more detail in FIG. 10 below.

The construction of the louvers 414 within the plate 412 (see FIG. 3) provides a myriad of advantages to fluid flow therealong. Liquid 420 descending downwardly upon the plate 412 will engage the louvers 414 facing upwardly causing the deflection of the liquid through the plate. This deflection may be in either an inward or outward direction as viewed in FIG. 9, depending upon the surface from which the louver upstands. If the liquid does not migrate through the plate 412 via a particular louver, it may find a path of migration through said plate by virtue of a second or third louver disposed above or below having the same orientation. It may be seen that the pattern of louvers in the present embodiment of the invention includes at least two, adjacent louvers on one side of the plate 412 having identical orientations, disposed adjacent louvers having an opposite orientation. The actual pattern will be discussed in more detail below.

Still referring to FIG. 9, the ascending vapor 422 will likewise find itself engaged by downwardly extending louvers such as louver 448 which will capture and redirect portions of ascending vapor flow therethrough. The ascending vapor flow passing upwardly through louver 448 will directly engage descending liquid flow captured by upper louver 449, disposed immediately thereabove, for enhancing the vapor-liquid contact therebetween. Not only is the liquid directly forced into engagement with the vapor, but the vapor is permitted to vent through the plate 412 for proper pressure and flow equalization.

Referring now to FIG. 10, there is shown an enlarged, side elevational, cross-sectional view of a section of the plate 412 of FIG. 9 illustrating the louvered configuration thereof. The louvers have been sequentially numbered to generally correspond to the previous numbering of the louvers in FIG. 9 and their position along section 442. The louvers are seen to extend from inside plate surface 604 and outside plate surface 608, from which directional references will be taken. Louver 540 is thus seen as the counterpart of louver 440, extending downwardly and outwardly from surface 608. Louvers 540, 544 and 546 are shown in FIG. 9 for reference purposes.

Still referring to FIG. 10, the flow of liquid 420 is shown in the direction of arrow 506, which flow is downwardly and outwardly beneath louver 540 in the general direction of arrow 432. Immediately beneath louver 540 on surface 604 is "companion" louver 490 facing upwardly and inwardly. The aperture 493, defined as that opening between oppositely oriented companion louvers 490 and 540 (one facing inwardly, one facing outwardly), will form a larger opening than any single small louver 414 could form by itself relative to the plate 412. Louver 490 thus faces upwardly in association with louver 540 to define aperture 493, which aperture engages descending liquid flow 506 for vectoring said liquid flow outwardly therethrough in the direction of arrow 495. It has been demonstrated that upwardly deflecting louvers engage and directly deflect the downward flow of liquid 420 therethrough, forcing said liquid to pass through the plate 412.

Still referring to FIG. 10, beneath louver 490 is "juxtaposed" louver 544, which louver is angled downwardly and outwardly. Below louver 544 is companion louver 496, which faces inwardly and upwardly. Louver 498 juxtaposed beneath louver 496 and formed from common, inwardly opening V-shaped louver section 510 faces downwardly and inwardly. Louver 546 faces upwardly and outwardly and is juxtaposed lower louver 502 which faces downwardly and inwardly. Louver 504 forms a companion to louver 502 and faces outwardly and upwardly. Louver 504 and louver 505 are formed from a common, outwardly opening, V-shaped louver section 511. It may be seen that any liquid passing downwardly over the outward surface of the louver 546 could be engaged by the upward opening of louver 504 and be deflected therethrough. Liquid which is not deflected through louver 504 will pass downwardly across the upper and outer surface 608 of the next group of louvers 414 extending outwardly and which are oriented downwardly. The louver group 507 formed of companion louvers 414 extending from opposite sides 604 and 608 of plate 412 may be seen to be larger than upper louver group 509 which only incorporates juxtaposed louvers 546 and 502 above discussed. Each louver group 507 incorporates four juxtaposed louvers which are numbered for reference purposes as louvers 533, 534, 535 and 536. Between each grouping of louvers 507 and 509 there is disposed either generally V-shaped louver section 510 or 511. The V-shaped louver sections 510 and 511 are alternately oriented and disposed between said louver groups. The V-shaped sections opening, or facing outwardly are designated as louver sections 511 while the inwardly facing sections are designated as louver sections 510. It may be seen in the current pattern that five groups of juxtaposed louvers 509 are generally disposed between each louver group 507. This particular array is provided for purposes of illustration only. A large variety of patterns and arrays of louvers 414 could be constructed in accordance with the principles of the present invention. This particular pattern has been found to provide a louver pattern which is structurally sound relative to the plate 412.

Referring now to FIG. 11, there is shown the same view of the plate section of FIG. 10 illustrating, in more detail, one pattern of the passage of vapor and liquid therethrough. As with FIG. 7, each of the various louvers are not separately numbered in this view for purposes of facilitating a discussion of the fluid flow pattern therein. Descending liquid 420 is thus shown to form a split stream 601 and 602 as it encounters first companion louvers 490 and 540, with louver 490 projecting from side 604. The stream 602 is vectored downwardly and outwardly under louver 540 causing it to pass to the outside surface 608 of plate 412. Along the inside surface 604, the remaining liquid 601 is permitted to continue downwardly. In this pattern, it may continue downwardly or flow through louver 496 to the outside surface 608 of plate 412 as indicated by flow arrow 610. The volume of fluid 610 vectored through the louvers such as louver 496, will depend upon a number of parameters including the type of liquid, flow rate, the louver size, and the configuration of ascending vapor flow 422. It may be seen that the size of the opening for the louver 490 is finite, and once the maximum flow therethrough is achieved, additional liquid will simply flow past the louver.

Still referring to FIG. 11, the liquid flow 601 may continue downwardly along the inside surface 604 below louver 496 to egress through louver 505 as labeled stream 612. A wide variety of flow configurations would, of course, be possible, and these are presented for purposes of illustration only. The accumulation of fluid flow streams 602 and 610 may likewise continue downwardly along the outside surface 608, or a portion thereof may be vectored back through the louver 504 as shown by flow arrow 616. In that configuration, the flow 616 will then flow downwardly along plate surface 604 and accumulate with remaining flow 601 from above. At this point the liquid which began as liquid flow 420 may have passed through the plate twice; having been exposed to ascending vapor flow 422 on both sides of the plate 412. As stated above the designation of the louver through which the flow passes clearly depends on the point of reference of the observer. Liquid stream 616 actually passes between louvers 502 and 504 because the space therebetween is formed as a result of said louvers in combination. References to flow through a single louver are to be viewed as a reference to flow through that louver and the adjacent louver forming the flow aperture therebetween.

Referring still to FIG. 11, the descending liquid flow 420 meets the ascending vapor flow 422 along the plate 412. The ascending vapor flow is vectored through the plate 412 by the downwardly extending louvers which present an exposed louver edge thereto. The louvers are sized to present a sufficient surface area for engaging and vectoring the vapor flow through the plate 412. However, there may be a volume of liquid passing through a particular louver which would block and/or prevent the ascending flow of vapor therethrough. It is for this reason that ascending vapor 422 is not shown passing through certain louvers such as louvers 502 and 540 where liquid flow is already present. Arrow 621 indicates the passage of vapor through louver 622 as arrow 623 indicates the passage of vapor through louver 624. Arrow 621 is shown oppositely disposed arrow 601, indicating the counter-current flow of vapor and liquid along this area of the inside surface 604 of plate 412. The pattern of louvers is provided for maximizing the potential of vapor-liquid contact and thus vertically adjacent louver groups 507 and 509 are oppositely oriented, as shown in FIG. 10. Additionally, it is thought that vapor may pass upwardly through one set of louvers while liquid passes downwardly through an adjacent set. The actual distribution of vapor and liquid through the plate 512 may vary depending on the particular application, vapor pressure, liquid volume and other operating parameters. An example of this varied interaction could include a descending liquid flow as indicated by arrow 690 of FIG. 11, opposite a louver 691 wherein a vapor flow 692 is occurring immediately therebeneath between louvers 693 and 694. Obviously, this counter-current flow of vapor and liquid through the plate 412 would further enhance the intimate interaction between said vapor and liquid. The mixing area 695 on side 604 of plate 412 would thus see close interaction between the ascending vapor and the descending liquid as would the area 696 on side 608 of plate 412. Such a specific interaction of the vapor and liquid may not always occur between adjacent louvered pairs but could occur between adjacent groups of louvers 507 and 509. The combinations are too plentiful to discuss in detail and it is not necessary that any specific combination, other than that shown, be established as preferred, according to the present understanding of the invention.

Referring back to FIGS. 9 and 10, the louvers 414 are constructed in a pre-defined pattern of select orientation. The patterns may, of course, vary for particular applications, but in the present invention the pattern incorporates oppositely a disposed louver groups 509. The particular pattern 700 as shown herein comprises first and second laterally disposed louvers 414, constructed in a density on the order of at least eight slotted open areas per square corrugation unit. The louvers 414 are arranged in the groups 507 and 509 as described above, and the lateral spacing provides structural integrity. The width of the louvers may vary, but in the present embodiment each louver has a width on the order of 45% of the width of the flat area 411. The laterally aligned pair of louvers terminate adjacent to, but short of the fold lines 417.

Still referring to FIG. 9, louvers 710 and 711 are formed side by side, which louvers 710 and 711 are upwardly and outwardly deflected. Louvers 713 and 714 are disposed beneath louvers 710 and 711, respectively, and are likewise formed outwardly and downwardly. Together they form the generally V-shaped louver section 511. It may be seen that each of the louvers 414 extend laterally within the flat areas between the ridges and valleys of each corrugated plate 412 and substantially all of the louvers terminate adjacent, but short of, the fold lines. This lateral size aspect of each louver is specifically shown in FIG. 9. As stated above with regard to FIG. 4, the terminology of upwardly and downwardly deflected louvers has been used herein, although alternative nomenclature could be used.

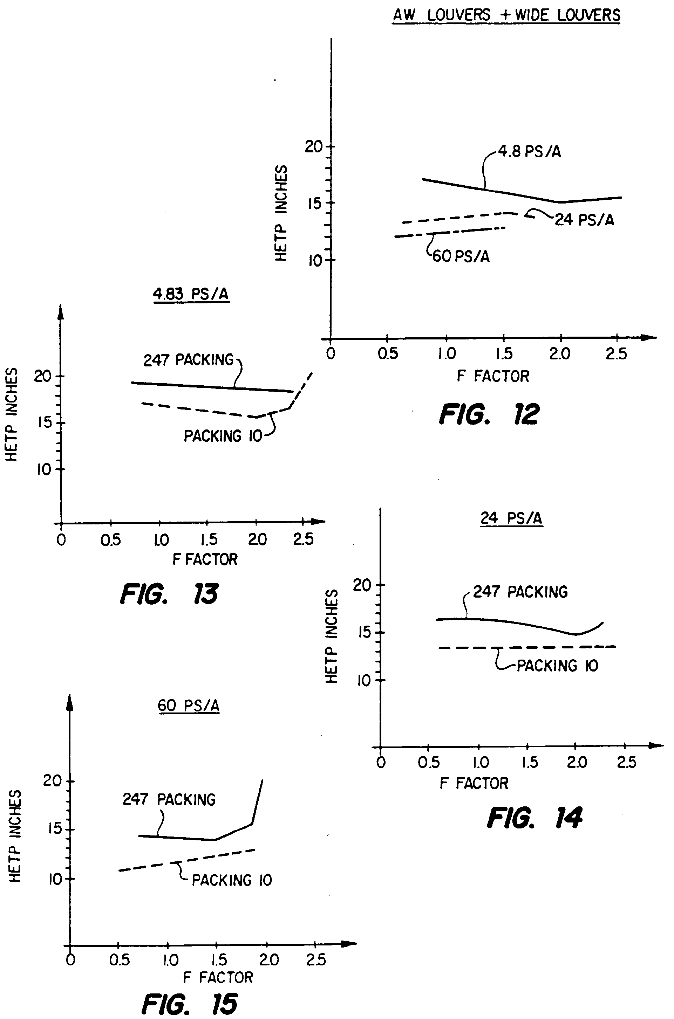

Referring now to FIGS. 12 through 15, there are shown graphs of the test results indicating performance characteristics of structured packing 10 at various operational conditions. FIG. 12 addresses the performance of structured packing 10, as shown in FIG. 4, and assembled in a test column diagrammatically similar to that illustrated in FIG. 5 for measuring the efficiency thereof. Also in this graph the performance of the structured packing 10 in a cyclohexane/n-heptane system is charted for three tower pressure ranges, to-wit: 4.8 psia (0.33 bar), 24 psia (1.65 bar) and 60 psia (4.14 bar). The performance is reflected in HETP inches appearing along the ordinate of the chart. The abscissa of the chart references the "F" factor, which is a common parameter in tower design. The "F" factor is the product of the superficial vapor velocity (V_{S}) across a tower cross section and the square root of vapor density (D_{V}), and it may be represented by the following formula: F=V_{S}(D_{V})^{½}

As indicated by the chart of FIG. 12 the efficiency of the packing decreases (a lower HETP) with an increase in pressure from 4.8 psia (0.33 bar) to 24 psia (1.65 bar). This graph indicates that the increase in pressure is so effectively accommodated by the louvered configuration above described that the performance characteristics actually improve.

Referring now to FIG. 13, there is shown a graph comparing the structured packing 10 of FIG. 4 to another structured packing configuration using the same system referred to above. The structured packing of comparison is that set forth and shown in U.S. Patent No. 4,604,247 (hereinafter referred to as the "'247 packing"). The relative performances of these packings are again charted with HETP appearing along the ordinate and the F-factor along the abscissa. As seen in FIG. 13, the packing 10 of FIG. 4 has an improved performance in comparison to the '247 structured packing. This performance curve is generated at a relatively low tower pressure of 4.83 psia.

Referring now to FIG. 14, there is shown the same chart as FIG. 13 and the comparison of the same structured packing and system therein. In this illustration, the above referenced packings are measured at a tower pressure of 24 psia. The tower packing 10 of the present invention has a better performance curve than the '247 packing. At this higher pressure the large louvers, particularly adapted for venting vapor through the plate 412, may contribute to the improved performance. It is thought that the size of the large louvers as well as their constructional configuration improves the vapor passage and homogeneity of vapor flow.

Referring now to FIG. 15, there is shown the charted performances of the above referenced pacing at a tower pressure of 60 psia. The packing 10 of FIG. 4 again performs better than the '247 packing. Again, the increased efficiency is thought to be attributable in part to the large louvers which facilitate the equalization of vapor pressure and the homogeneity of vapor flow around the plates 12 in the structure configuration shown herein.

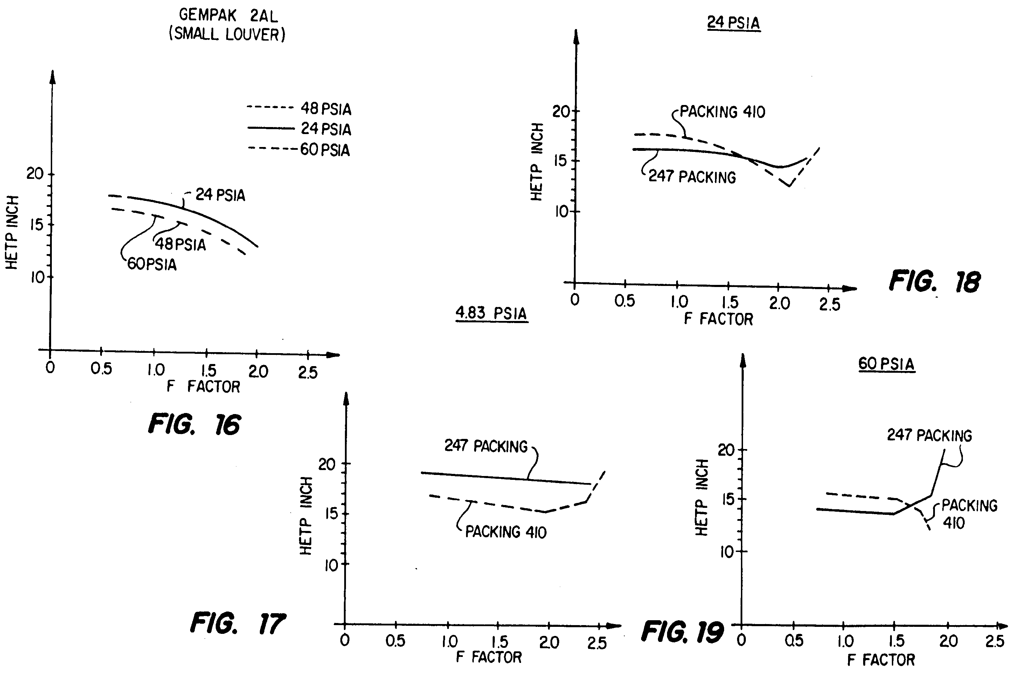

Referring now to FIGS. 16 through 19, there are shown graphs of the test results indicating performance characteristics of the structured packing 410 of FIG. 9 at various operational conditions. FIG. 16 addresses the performance of structured packing 410 assembled in a test column diagrammatically similar to that illustrated in FIG. 5 for measuring the efficiency thereof. Also in this graph the performance of the structured packing 410 in a cyclohexane/n-heptane system is charted for three tower pressure ranges, to-wit: 4.8 psia (0.33 bar), 24 psia (1.65 bar) and 60 psia (4.14 bar). The performance is reflected in HETP inches appearing along the ordinate of the chart. The abscissa of the chart references the "F" factor, which is a common parameter in tower design. The "F" factor is the product of the superficial vapor velocity (V_{S}) across a tower cross section and the square root of vapor density (D_{V}), and it may be represented by the following formula: F=V_{S}(D_{V})^{½}

As indicated by the chart of FIG. 16 the efficiency of the packing decreases (a higher HETP) with an increase in pressure from 4.8 psia (0.33 bar) to 24 psia (1.65 bar). However, the graph indicates that the increase in pressure from 24 psia (1.65 bar) to 60 psia (4.14 bar) is effectively accommodated by the louvered configuration above described and the performance characteristics actually improve to the HETP level of the 4. 8 psia range.

Referring now to FIG. 17, there is shown a graph comparing the structured packing 410 of FIG. 9 to the '247 packing discussed above. The relative performances of these packings are again charted with HETP appearing along the ordinate and the F-factor along the abscissa. As seen in FIG. 17, the packing 410 of FIG. 9 has an improved performance in comparison to the '247 structured packing. This performance curve is generated at a relatively low tower pressure of 4.83 psia (0.33 bar).

Referring now to FIG. 18, there is shown the same chart as FIG. 17 and the comparison of the same structured packing and system therein. In this illustration, the above referenced packings are measured at a tower pressure of 24 psia (1.65 bar). The tower packing 410 of the present invention has a better performance curve than the '247 packing for F factors above about 1.5. It is thought that the presence of the louvers as well as their constructional configuration improves the vapor passage and homogeneity of vapor flow at the higher F factor values. Referring now to FIG. 19, there is shown the charted performances of the above referenced packing at a tower pressure of 60 psia (4.14 bar). Again, the packing 410 of the present invention performs better than the '247 packing for F factors above about 1.5.

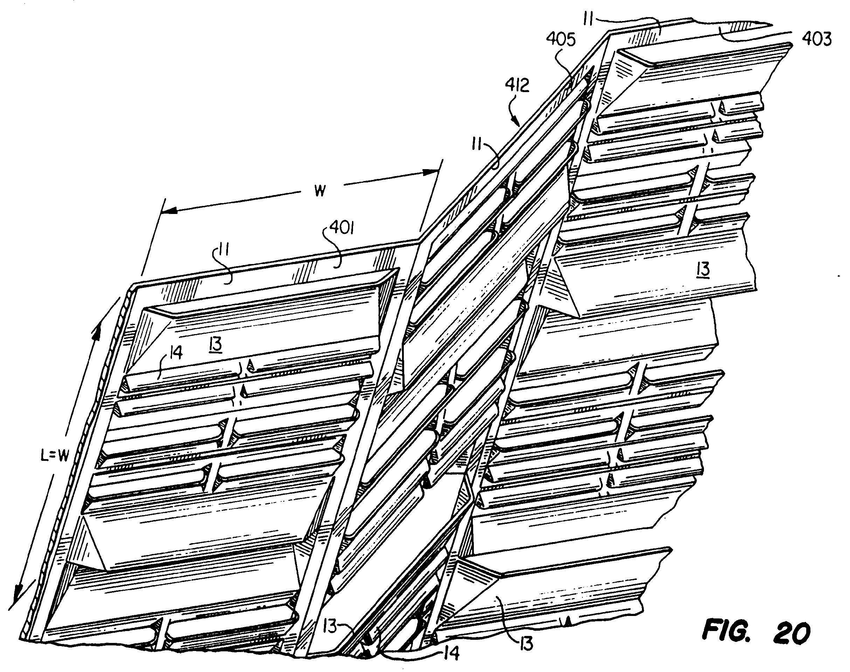

Referring now to FIG. 20, there is shown a perspective view of an alternative embodiment of the corrugated plate 12 of FIG. 4. Plate 12 includes a plurality of louvers 13 and 14 defining a series of directional flow openings therethrough. The large louvers 13 are, however, vertically staggered between corrugation flat areas 11 so that no two, adjacent large louvers 13 are laterally aligned one with the other. Corrugation flat areas 401 and 403 are thus shown with louvers 13 and 14 in lateral alignment one with the other. Intermediate corrugation flat area 405 is constructed with louvers 13 and 14 vertically offset from the lateral louver alignment between sections 401 and 403, whereby large louvers 13 are disposed approximately midway between the large louvers 13 of adjacent sections. It has been shown that this staggering of louver positions provides a structurally stronger plate 412, particularly when it is being coined from a flat metal sheet to form louvers 13 and 14 in the fabrication stage. Because of the aforesaid structural considerations, it is presently thought that this configuration may provide certain structural advantages, although operationally this embodiment is thought to perform in substantially the same manner as the other embodiments discussed herein.

In operation, the flow of liquid downwardly across the plates 12 and 412 is effectively improved relative to many prior art plate designs. Unlike smooth plates, the liquid is not given a chance to accumulate in the troughs 17 (as seen most clearly in FIG. 4) due to the spacing of the louvers. As seen in the drawings, the edges of the louvers are disposed along the borders of the trough, whereby any fluid accumulation therein is effectively diverted by the presence of the louver. As described above, in one embodiment, the louvers are thus constructed with pairs of small louvers of an oppositely oriented configuration disposed adjacent each large louver. The defined pattern, as shown herein, incorporates first and second pairs of small louvers between each pair of large louvers. Likewise, each pair of small louvers includes segmented louver regions. Due to the size of the small louvers, they are formed in segments relative to the large louver wherein the length of each small louver is approximately one half length of each large louver. This construction provides the structural rigidity necessary for the tower packing. Also, each small louver is oppositely oriented with regard to the large louver adjacent thereto. An upwardly, inwardly directed large louver is thus disposed above a pair of upwardly outwardly disposed small louvers which are themselves each provided in pairs beneath the large louver. This pattern of eight small louvers disposed between each set of large louvers is but one embodiment of the present invention. The small louvers may be constructed in varying arrays. The construction shown herein does however lend itself to symmetry in fabrication, which symmetry may contribute to the effectiveness of the performance data discussed herein.

It is thus believed that the operation and construction of the present invention will be apparent from the foregoing description. While the method and apparatus shown and described has been characterized as being preferred, it will be obvious that various changes and modifications may be made therein without departing from the scope of the invention as defined in the following claims.

## Claims

1. A tower packing for contacting a vapor stream with a liquid stream comprising a plurality of vertically oriented corrugated sheets in face to face contact with opposed corrugations inclined oppositely to one another, each of said sheets having fold lines therein establishing ridges and valleys separated by flat areas, said ridges, valleys and flat areas defining said corrugated configuration of said sheets, each of said flat areas being provided with a plurality of laterally extending louvers thereon, some of said louvers having upwardly facing edges and some having downwardly facing edges and substantially all of said louvers terminating adjacent but short of said fold lines.

2. A tower packing in accordance with Claim 1 in which said louvers include some projecting transversely outwardly from the respective planes of said flat areas and some projecting transversely inwardly from the respective planes of said flat areas.

3. A tower packing in accordance with Claim 2 in which at least some openings through said corrugated sheets are defined by an outwardly projecting louver of a first kind on one side thereof and an inwardly projecting louver of a first kind on an opposed side thereof.

4. A tower packing in accordance with Claim 1 in which at least some of said louvers are arranged in said flat areas in laterally aligned pairs.

5. A tower packing in accordance with Claim 4 in which the louvers of said laterally aligned pairs have their respective edges oriented in the same vertical direction, and extend in the same transverse direction from the respective plane of said flat areas.

6. A tower packing in accordance with Claim 1 wherein said louvers are formed in sets of companion louvers projecting outwardly from opposite sides of said sheet and defining a single opening therebetween.

7. A tower packing in accordance with Claim 6 wherein at least two companion louver sets having a first orientation are disposed above at least two companion louver sets having a second, opposite orientation.

8. A tower packing in accordance with Claim 7 in which said companion louvers are disposed in a pattern comprising at least two louvers on a first side of said sheet having upwardly facing edges disposed immediately above at least two louvers on said first side having downwardly facing edges.

9. A tower packing in accordance with Claim 8 wherein said louvers are formed in said flat areas in a density on the order of at least eight louvers projecting transversely outwardly from said first side per square corrugation unit.

10. A tower packing in accordance with Claim 1 in which some of said louvers are of a first type extending substantially from a point adjacent one fold line to a point adjacent the next fold line, and the balance of said louvers being of a second type extending less than the lateral distance between fold lines.

## Patentansprüche

1. Kolonnenpackung, um einen Dampfstrom mit einem Flüssigkeitsstrom in Kontakt zu bringen, die mehrere in senkrechter Richtung gefaltete Bleche enthält, die direkt gegenüber von entgegengesetzten Faltungen in Berührung mit diesen angebracht sind, wobei sie entgegengesetzt zueinander geneigt sind, wobei jedes dieser Bleche Faltungen besitzt, die in dem Blech Grate und Täler verursachen, die durch flache Bereiche getrennt sind, wobei diese Grate, Täler und flachen Bereiche den gefalteten Aufbau dieser Bleche kennzeichnen und jeder flache Bereich mit mehreren sich seitlich erstreckenden Leitvorrichtungen versehen ist und einige dieser Leitvorrichtungen nach oben zeigende Kanten und einige nach unten zeigende Kanten besitzen und im wesentlichen alle dieser Leitvorrichtungen neben, aber nah bei diesen Falzlinien enden.

2. Kolonnenpackung nach Anspruch 1, bei der einige Leitvorrichtungen schräg nach außen von den jeweiligen Flächen der flachen Bereiche vorstehen und einige schräg nach innen von den jeweiligen Flächen der flachen Bereiche vorstehen.

3. Kolonnenpackung nach Anspruch 2, bei der zumindest einige Öffnungen in den gefalteten Blechen durch eine nach außen vorstehende Leitvorrichtung einer ersten Art auf der einen Seite und durch eine nach innen vorstehende Leitvorrichtung der ersten Art auf der entgegengesetzten Seite gekennzeichnet sind.

4. Kolonnenpackung nach Anspruch 1, bei der zumindest einige dieser Leitvorrichtungen in den flachen Bereichen in seitlich auf einer Linie liegenden Paaren angeordnet sind.

5. Kolonnenpackung nach Anspruch 4, bei der die jeweiligen Kanten der Leitvorrichtungen der seitlich auf einer Linie liegenden Paare in gleicher senkrechter Richtung ausgerichtet sind und sich in der gleichen Schrägrichtung von den jeweiligen Flächen der flachen Bereiche erstrecken.

6. Kolonnenpackung nach Anspruch 1, bei der die Leitvorrichtungen in Sätzen von zueinandergehörenden Leitvorrichtungen aufgebaut sind, die von entgegengesetzten Seiten der Bleche nach außen überstehen und eine einzelne Öffnung dazwischen bilden.

7. Kolonnenpackung nach Anspruch 6, bei der zumindest zwei zusammengehörende Leitvorrichtungssätze, die eine erste Ausrichtung haben, über zumindest zwei zusammengehörenden Leitvorrichtungssätzen angeordnet sind, die eine zweite, entgegengesetzte Ausrichtung haben.

8. Kolonnenpackung nach Anspruch 7, bei der diese zusammengehörenden Leitvorrichtungen in einem Muster angeordnet sind, das zumindest zwei Leitvorrichtungen mit nach oben zeigenden Kanten an einer ersten Seite des Bleches enthält, die direkt über zumindest zwei Leitvorrichtungen mit nach unten zeigenden Kanten auf dieser ersten Seite angebracht sind.

9. Kolonnenpackung nach Anspruch 8, bei der die Leitvorrichtungen in den flachen Bereichen in einer Dichte in der Größenordnung von zumindest acht Leitvorrichtungen, die von der ersten Seite schräg nach außen vorstehen, pro Quadratfaltungseinheit gebildet werden.

10. Kolonnenpackung nach Anspruch 1, bei der es sich bei einigen Leitvorrichtungen um einen ersten Typ, der sich im wesentlichen von einem Punkt neben einer Falzlinie zu einem Punkt neben der nächsten Falzlinie erstreckt, und bei den restlichen Leitvorrichtungen um einen zweiten Typ handelt, der sich über weniger als den seitlichen Abstand zwischen den Falzlinien erstreckt.

## Revendications

1. Corps de remplissage destiné à mettre en contact un courant de vapeur avec un courant de liquide, comprenant plusieurs tôles ondulées orientées verticalement, en contact face à face et présentant des ondulations opposées inclinées en sens inverse entre elles, chacune desdites tôles comportant des lignes de pliage établissant des crêtes et des vallées séparées par des zones planes, lesdites crêtes, vallées et zones planes définissant ladite configuration ondulée desdites tôles, chacune desdites zones planes étant pourvue de plusieurs volets s'étendant latéralement sur elle, dont certains présentent des bords tournés vers le haut et d'autres des bords tournés vers le bas, sensiblement tous lesdits volets se terminant à proximité desdites lignes de pliage, mais à une faible distance de celles-ci.

2. Corps de remplissage selon la revendication 1, dans lequel lesdits volets comprennent certains volets qui font saillie transversalement vers l'extérieur à partir des plans respectifs desdites zones planes et certains volets qui font saillie transversalement vers l'intérieur à partir des plans respectifs desdites zones planes.

3. Corps de remplissage selon la revendication 2, dans lequel au moins certaines ouvertures ménagées à travers lesdites tôles ondulées sont définies d'un côté par un volet d'un premier type faisant saillie vers l'extérieur et du côté opposé, par un volet d'un premier type faisant saillie vers l'intérieur.

4. Corps de remplissage selon la revendication 1, dans lequel au moins certains desdits volets sont disposés dans lesdites zones planes par paires alignées latéralement.

5. Corps de remplissage selon la revendication 4, dans lequel les volets desdites paires alignées latéralement ont leurs bords respectifs orientés dans la même direction verticale et s'étendent dans la même direction transversale depuis le plan respectif desdites zones planes.

6. Corps de remplissage selon la revendication 1, dans lequel lesdits volets sont réalisés sous forme de jeux de volets d'accompagnement faisant saillie vers l'extérieur à partir de côtés opposés de ladite tôle et définissant entre eux une ouverture unique.

7. Corps de remplissage selon la revendication 6, dans lequel au moins deux jeux de volets d'accompagnement présentant une première orientation sont disposés au-dessus d'au moins deux jeux de volets d'accompagnement présentant une seconde orientation opposée.

8. Corps de remplissage selon la revendication 7, dans lequel lesdits volets d'accompagnement sont disposés suivant une configuration comprenant au moins deux volets situés sur un premier côté de ladite tôle, présentant des bords tournés vers le haut et disposés immédiatement au-dessus d'au moins deux volets situés sur ledit premier côté et présentant des bords tournés vers le bas.

9. Corps de remplissage selon la revendication 8, dans lequel lesdits volets présentent dans lesdites zones planes une densité de l'ordre d'au moins huit volets faisant saillie transversalement vers l'extérieur à partir dudit premier côté, par unité d'ondulation carrée.

10. Corps de remplissage selon la revendication 1, dans lequel certains desdits volets sont d'un premier type s'étendant essentiellement depuis un point adjacent à une ligne de pliage, vers un point adjacent à la ligne de pliage qui suit et le restant desdits volets étant d'un second type s'étendant sur une distance inférieure à la distance latérale entre des lignes de pliage.
